# EUROPÄISCHE PATENTSCHRIFT

(11) **EP 3 420 312 B1**
(45) Veröffentlichungstag und Bekanntmachung des Hinweises auf die Patenterteilung: **13.11.2019**
(21) Anmeldenummer: 17706740.2
(22) Anmeldetag: 22.02.2017
(51) Int. Cl.: G01C 21/20

(54) **ROUTENOPTIMIERUNG FÜR EIN FLUIDFAHRZEUG**
FLUID VEHICLE ROUTE OPTIMISATION
OPTIMISATION DE ROUTE POUR UN VÉHICULE À MILIEU PORTEUR FLUIDE

(30) Priorität: 23.02.2016 DE 102016202784
(43) Veröffentlichungstag der Anmeldung: 02.01.2019
(73) Patentinhaber: thyssenkrupp Marine Systems GmbH, 24143 Kiel (DE); thyssenkrupp AG, 45143 Essen (DE)
(72) Erfinder: MUNDE, Robert, 24111 Kiel (DE); LAUBE, Christian, 24644 Timmaspe (DE); SCHRÖTER, André, 24109 Kiel (DE)
(74) Vertreter: thyssenkrupp Intellectual Property GmbH
(86) Internationale Anmeldenummer: PCT/EP2017/053983
(87) Internationale Veröffentlichungsnummer: WO 2017/144494

(56) Entgegenhaltungen:
- US-A1- 2012 158 280
- US-A1- 2013 293 406

## Beschreibung

Die Erfindung betrifft ein Verfahren zur Berechnung einer optimalen Route für ein Fluidfahrzeug, insbesondere für ein Unterwasserfahrzeug.

Die Routenplanung für Fluidfahrzeuge ist komplex, da jede beliebige Route im dreidimensionalen Raum theoretisch möglich ist. Fluidfahrzeuge sind nicht auf eine festinstallierte Wegestruktur angewiesen. Hierzu kommt, dass die Fortbewegung eines Fluidfahrzeugs nicht nur dazu dient von Punkt A nach Punkt B zu kommen. Es kann beispielsweise die Aufgabe bestehen, sich leise und unbemerkt in einem Gebiet aufzuhalten um selber Informationen zu sammeln.

Des Weiteren kommt erschwerend hinzu, dass Fluidfahrzeuge oft komplexere Antriebssysteme haben als Landfahrzeuge, die für unterschiedliche Betriebsweisen sehr unterschiedliche Eignungen aufweisen. Beispielsweise kann ein Unterseeboot einen Dieselantrieb und einen Elektroantrieb aufweisen, wobei der Diesel entweder direkt die Schraube antreibt oder dieselelektrisch über den Elektroantrieb. Vorteil des Dieselantriebs ist die vergleichsweise große Reichweite und die gute Verfügbarkeit des Treibstoffs. Nachteil des Dieselantriebs ist, dass dieser vorteilhaft nur bei Überwasserfahrt oder bei Schnorchelfahrt eingesetzt werden kann. Hierbei kann Luft aufgenommen und Abgas abgegeben werden. Bei Tauchfahrten verschlechtert sich der Wirkungsgrad eines außenluftunabhängigen Dieselantriebs. Für Tauchfahrten verfügen Unterseeboote üblicherweise über Batterien. Diese haben jedoch nur eine sehr begrenzte Kapazität, sind also nur für vergleichsweise geringe Reichweiten geeignet. Neuere Unterseeboote verfügen daher oft über ein nicht-nukleares, außenluftunabhängiges Antriebssystem, beispielsweise Brennstoffzellen, welche z.B. mit Wasserstoff und Sauerstoff betrieben werden. Diese ermöglichen einem Unterseeboot auch lange Tauchfahrten, wobei die maximale Leistungsabgabe der Brennstoffzelle regelmäßig auf eine reduzierte Höchstgeschwindigkeit ausgelegt ist. Die Berechnung der Reichweite eines Unterseeboots steht somit in Abhängig von der gewählten Betriebsart und Reichweite.

Zwar können einige Probleme durch die Verwendung eines Nuklearantriebs beseitigt werden, hier kommen jedoch weitere Restriktionen aufgrund der verwendeten Technologie und des rechtlichen Rahmens hinzu. Weiter sind solche Unterseeboote vergleichsweise groß.

Aus diesem Grund lässt sich das Prinzip eines Navigationssystems nicht einfach von einem Landfahrzeug auf ein Fluidfahrzeug übertragen.

Aus der US 2005/0216181 A1 ist ein Routenplanungsverfahren bekannt.

Aus der US 2016/0018525 A1 ist eine quantenphotonische Vorrichtung für ein Unterwasserfahrzeug bekannt.

Aus der DE 10 2004 024 972 A1 ist ein Verfahren zur Fahrtplanung eines Unterseeboots bekannt.

Aus der US 7,613,553 B1 ist ein Verfahren zur autonomen Kontrolle eines Fahrzeugs bekannt.

Aus der DE 10 2009 014 978 A1 ist ein Verfahren zur Routenbestimmung bekannt.

Aus der DE 10 2006 035 878 A1 ist ein Verfahren zur Bestimmung eines Fahrwegs für ein Unterwasserfahrzeug bekannt.

Aus der 2010 International Conference on Computer Application and System Modeling (ICCASM 2010), Li Yuyang, Da Lianglong, Han Mei, Jin Chaobo, Optimal Route Programming of Submarine Based on Genetic Algorithm, V9-404ff ist ein Verfahren zur Routenoptimierung von Unterseebooten beschrieben.

Aus der US 2012 / 158 280 A1ist eine Methode zur Routenberechnung bekannt.

Aus der US 2013/293406 A1 ist eine Methode zur Erhöhung der Überlebenswahrscheinlichkeit für ein Fahrzeug bekannt, wobei Bedrohungsinformationen vor dem Beginn einer Mission in einem Modell berücksichtigt werden.

Aufgabe der Erfindung ist es, ein Verfahren zur Berechnung einer Route für ein Fluidfahrzeug bereitzustellen, welches die spezifischen Parameter eines Fluidfahrzeugs berücksichtigt.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung.

Unter Fluidfahrzeug wird im Sinne der Erfindung ein Fahrzeug verstanden, welches sich in einem Fluid und/oder auf einer Grenzschicht zweier Fluide bewegen kann. Während es sich bei dem Fluidfahrzeug, welches das erfindungsgemäße Verfahren verwendet vorzugsweise um ein bemanntes oder unbemanntes Wasserfahrzeug, weiter bevorzugt um ein bemanntes oder unbemanntes Unterwasserfahrzeug, ganz besonders bevorzugt um ein bemanntes Unterseeboot handelt, umfassen die weiteren Fluidfahrzeuge neben Wasserfahrzeugen auch Luftfahrzeuge sowie Fahrzeuge, welche sich wenigstens zeitweise sowohl in Wasser als auch in Luft bewegen. Luftfahrzeuge sind für Wasserfahrzeuge relevant, da diese regelmäßig zur Ortung von Wasserfahrzeugen eingesetzt werden. Beispielhaft seien hier die P-3 Orion oder die Tu-95 genannt. Als Fahrzeuge, welche sich wenigstens zeitweise sowohl in Wasser als auch in Luft bewegen, seien beispielhaft aus getauchten Unterseebooten gestartete Flugkörper oder von Überwasserschiffen oder Unterseebooten gestartete Raketen mit Torpedos insbesondere zur Unterseebootbekämpfung genannt.

Das erfindungsgemäße Verfahren zur Berechnung einer Route für ein Fluidfahrzeug umfasst die Schritte:
a) Ermitteln der Randparameter und
b) Ermitteln der optimalen Route.
Die in Schritt a) erfolgende Ermittlung der Randparameter umfasst die Schritte:
a1) Definieren eines Einsatzprofils,
a2) Definieren einer Zielposition,
a3) Erfassen der eigenen Position,
a4) Beschaffung Umgebungsinformationen,
a5) Beschaffung Eigeninformationen,
a6) Beschaffung statischer Fremdinformationen.
Die Schritte a1) bis a6) können in beliebiger Reihenfolge durchgeführt werden und hierbei zeitlich überlappen. Diese Schritte können auch in zeitlich getrennten Teilschritten oder wiederholt durchgeführt werden.

In Schritt a1) wird das Einsatzprofil definiert. Dieses bedeutet, dass in Abhängigkeit von der aktuellen Aufgabenstellung im Einsatz definiert wird, ob und mit welcher Wahrscheinlichkeit eine Detektion durch ein weiteres Fluidfahrzeug tolerierbar ist.

In Schritt a4) werden dreidimensionale Umgebungsinformationen beschafft. Es können bevorzugt statische dreidimensionale Umgebungsinformationen beschafft werden. Ein Beispiel für statische dreidimensionale Umgebungsinformationen sind Seekarten mit Höhen/Tiefen-Profil.

In Schritt a4) werden zusätzlich auch dynamische Umgebungsinformationen erfasst, wobei als dynamische Umgebungsinformationen mittels eines Sensors weitere Fluidfahrzeuge gesucht werden. Die dynamischen Umgebungsinformationen können beispielsweise mittels Sonar, insbesondere Passivsonar oder Aktivsonar, oder Radar erfasst werden.

Bei der Suche nach weiteren Fluidfahrzeugen muss es nicht immer zu einer Detektion kommen, da nicht immer weitere Fluidfahrzeuge in der Detektionsreichweite des Fluidfahrzeugs sind.

Schritt b) umfasst die folgenden Schritte:
b1) Bestimmen nicht zu durchquerender Bereiche aus den in Schritt a4) beschafften dreidimensionalen Umgebungsinformationen,
b2) Bestimmen nicht zu durchquerender Bereiche aus den in Schritt a4) erfassten dynamischen Umgebungsinformationen in Korrelation mit sowohl den in Schritt a6) beschafften statischen Fremdinformationen sowie dem in Schritt a1) definierten Einsatzprofil,
b3) Bestimmen der Route unter Vermeidung der in den Schritten b1) und b2) bestimmten nicht zu durchquerenden Bereichen sowie von Routenparametern entsprechend dem in Schritt a1) definierten Einsatzprofil.

In Schritt b1) werden somit Bereiche identifiziert, welche z.B. aufgrund von Untiefen oder Unterwassergebirgen nicht durchquert werden können. Hierbei ist neben den eigentlichen Bereichen selbst auch der notwendige Sicherheitsabstand, ggf. auch unter Berücksichtigung der Genauigkeit des Kartenmaterials, zu berücksichtigen. Zudem hängt dieser Sicherheitsabstand, der den nicht zu durchquerenden Bereich über das Hindernis hinaus vergrößert auch von der Größe und Wendigkeit des Fluidfahrzeugs ab.

In Schritt b2) werden weitere Bereiche identifiziert, die nicht durchquert werden können. Hierzu werden dynamische Umgebungsinformationen, insbesondere die Information über weitere Fluidfahrzeuge mit den statischen Fremdinformationen und dem Einsatzprofil korreliert, wobei die statischen Fremdinformationen beispielsweise und bevorzugt Informationen über die Eigenschaften eines weiteren Fluidfahrzeugs bezüglich Zugehörigkeit und Befähigung zur Auffindung von Fluidfahrzeugen umfassen.

Aus der Identifizierung von nicht zu durchquerenden Bereichen ergibt sich um Umkehrschluss die Definition aller anderen Bereiche als durchquerbar. Durch diese Bereiche kann in Schritt b3) dann eine Berechnung einer optimierten Route nach einem normalen Routenplanungsprogramm durchgeführt werden.

Beispielsweise wird als weiteres Fluidfahrzeug ein Frachtschiff identifiziert, so kann ein Unterseeboot vergleichsweise nah an diesem vorbeifahren, da ein Frachtschiff im Regelfall nur geringe Mittel zu Ortung hat. Wird als weiteres Fluidfahrzeug ein Militärschiff identifiziert, so ist dessen Zugehörigkeit (zur eigenen Flotte, zu neutralen Staaten oder zur gegnerischen Flotte) ein entscheidender Parameter. Ein Militärschiff der eigenen Flotte kann das Fluidfahrzeug orten, ohne das eine Gefahr für das Fluidfahrzeug ausgeht. Bei einem Schiff der gegnerischen Flotte ist ein Abstand zu halten, der eine Ortung praktisch ausschließend, wobei die Informationen über (ggf. geschätzte) Fähigkeit zur Detektion des gegnerischen Militärschiffes zur Definition des nicht zu durchquerenden Bereichs verwendet wird. Bei einem neutralen Schiff kann ein Mittelweg gewählt werden, da eine Detektion vermieden werden soll, aber auch nicht unmittelbar einen Nachteil durch eine Detektion durch das neutrale Schiff darstellen würde.

Bei dieser Korrelation wird das definierte Einsatzprofil berücksichtigt. Ist das Einsatzprofil Schleichfahrt definiert, so ist eine Detektion vollständig auszuschließen. Wird als Einsatzprofil eine Transferfahrt, insbesondere eine Transferfahrt in Gewässern mit besonderen Regeln, definiert, so kann eine Detektion ggf. auch gewünscht sein. Letztes ist beispielsweise in hoch befahrenen Schifffahrtswegen für welche internationale Verträge gelten, z.B. den Bosporus, der Fall, um eine Kollision sowie einen Verstoß gegen die internationalen Verträge zu vermeiden.

In einer weiteren Ausführungsform der Erfindung werden in Schritt b2) weitere Fluidfahrzeuge einer Fahrzeugkategorie zugeordnet, wobei Fahrzeugkategorie ausgewählt wird aus der Gruppe umfassend eigene Fluidfahrzeuge, neutrale Fluidfahrzeuge und feindliche Fluidfahrzeuge. Unter eigene Fluidfahrzeuge fallen alle Fluidfahrzeuge der gleichen Flotte beziehungsweise von Verbündeten. Eine Detektion durch eigene Fluidfahrzeuge ist unproblematisch, sodass hier der nicht zu durchquerende Bereich auf den sicherheitstechnischen Abstand begrenzt werden kann. Zu feindlichen Fluidfahrzeugen zählen alle Fluidfahrzeuge, bei denen man eine Detektion oder einen Kontakt vermeiden möchte. Beispielsweise handelt es sich um militärische Fluidfahrzeuge einer anderen Macht. Bei feindlichen Fluidfahrzeugen ist davon auszugehen, dass diese über eine Möglichkeit zur Detektion, beispielsweise ein Sonar, verfügen. Diese Fähigkeit vergrößert den Raum um das feindliche Fluidfahrzeug, der nicht durchquert werden sollte. Bei neutralen Fluidfahrzeugen besteht üblicherweise keine unmittelbare Gefahr bei einer Entdeckung, beispielsweise handelt es sich bei einem neutralen Fluidfahrzeug um ein Fluidfahrzeug einer neutralen Macht. Da aber die eigene Positionsinformation möglichst nicht bekannt werden sollte, sollte hier eine Detektion oder ein Kontakt vermieden werden. Da jedoch die unmittelbaren Konsequenzen geringer sind, kann in diesem Fall der nicht zu durchquerende Bereich geringer gewählt werden als bei einem feindlichen Fluidfahrzeug.

In einer weiteren Ausführungsform der Erfindung werden in Schritt a4) dynamische Umgebungsinformationen durch Kommunikation beschafft. Beispielsweise kann ein Überwasserschiff mit dem Fluidfahrzeug in Kommunikation stehen, wobei das Überwasserschiff insbesondere auch aktiv weitere Fluidfahrzeuge erfasst. Hierdurch kann dieses Überwasserschiff selbst vergleichsweise leicht durch weitere Fluidfahrzeuge geortet werden. Die gewonnenen Informationen über weitere Fluidfahrzeuge kann das Überwasserschiff an das Fluidfahrzeug kommunizieren. Hierdurch ist eine Bestimmung nicht zu durchquerender Bereiche in Schritt b2) sehr viel präziser möglich.

In einer weiteren Ausführungsform der Erfindung umfassen die in Schritt a4) beschafften statischen dreidimensionalen Umgebungsinformationen auch bekannte fest installierte Sensoren. Ein Beispiel für solche Sensoren ist das amerikanische Sosus. Besonders bevorzugt werden diese Informationen mit in Schritt a6) beschafften Fremdinformationen über die Detektionseigenschaften der Sensoren in Schritt b1) korreliert, um die nicht zu durchquerenden Bereiche zu bestimmen.

Erfindungsgemäß wird in Schritt a1) das Einsatzprofil durch Auswahl aus mindestens zwei vorgegebenen Einsatzprofilen definiert, wobei sich mindestens zwei der Einsatzprofile dadurch unterscheiden ob und mit welcher Wahrscheinlichkeit eine Detektion durch ein weiteres Fluidfahrzeug zulässig ist. Sie werden ausgewählt aus der Gruppe umfassend Transferfahrt, Schleichfahrt, Aufnahme, Auftauchen, Abtauchen, Angriff, Flucht, Langzeittauchfahrt, Ausweichen.

Eine Transferfahrt erfolgt üblicherweise als Überwasserfahrt, wobei eine Detektion durch weitere Fluidfahrzeuge unbeachtlich ist. Hier erfolgt die Optimierung der Route regelmäßig nach ökonomischen Kriterien. Bei Schleichfahrt ist eine Detektion regelmäßig zu vermeiden, dieses hat Vorrang vor allen anderen Parametern, ggf. mit Ausnahme der Reichweite im getauchten Zustand. Bei Langzeittauchfahrt ist insbesondere der Energieverbrauch zu berücksichtigen, um mit den vorhandenen Ressourcen möglichst lange getaucht zu bleiben, beispielsweise um in einem Gebiet möglichst lange getaucht Überwachungsaufgaben wahrzunehmen.

In einer weiteren Ausführungsform der Erfindung wird aufgrund des ausgewählten Einsatzprofils eine maximale Detektionswahrscheinlichkeit bestimmt. Hierbei variiert die tolerierbare maximale Detektionswahrscheinlichkeit zwischen in etwa 0 % bei Schleichfahrt und 100 % bei Transferfahrt. Die Detektionswahrscheinlichkeit kann bei verschiedenen Einsatzprofilen auch eine Abhängigkeit der Zugehörigkeit des weiteren Fluidfahrzeugs aufweisen. Alternativ können statt der Detektionswahrscheinlichkeit auch Detektionsklassen verwendet werden. Letztere stellen einen Bereich der Detektionswahrscheinlichkeit dar und berücksichtigen somit die möglichen Fehlerintervalle bei der Bestimmung der Detektionswahrscheinlichkeit.

In einer weiteren Ausführungsform der Erfindung wird aufgrund des ausgewählten Einsatzprofils und der Fahrzeugkategorie weiterer Fluidfahrzeuge eine maximale Detektionswahrscheinlichkeit in Anhängigkeit der Fahrzeugkategorie jedes einzelnen weiteren Fluidfahrzeugs bestimmt.

In einer weiteren Ausführungsform der Erfindung werden in Schritt a4) weitere Fluidfahrzeuge mittels Sonarempfänger gesucht. Besonders bevorzugt wird mittels passiven Sonar gesucht. Alternativ oder zusätzlich kann ein Hilfsfluidfahrzeug, dessen Position dem Fluidfahrzeug bekannt ist, Sonarimpulse aussenden, welche dann durch den Sensor des Fluidfahrzeugs erfasst und ausgewertet werden können. Dieses Verfahren eignet sich insbesondere, wenn das Fluidfahrzeug mit einem Überwasserschiff als Hilfsfluidfahrzeug oder einem unbemannten Hilfsfluidfahrzeug kooperiert.

Erfindungsgemäß werden in Schritt a4) Information über Position und Art weiterer Fluidfahrzeuge beschafft. Beispielsweise erfolgt die Beschaffung dieser Informationen durch die Auswertung der mit dem Passivsonar empfangenen Daten. Über die Geräuschsignatur lässt sich beispielsweise die Art der weiteren Fluidfahrzeuge identifizieren, soweit man über die hierfür notwendigen statischen Fremdinformationen verfügt, oder wenigstens durch Extrapolation und Vergleich mit vorher aufgenommenen Geräuschsignaturen abschätzen. So weisen Schiffsschrauben von zivilen Frachtschiffen regelmäßig eine auf Verbrauch optimierte Form auf, von Sportboote eine auf Geschwindigkeit optimierte Form und von Militärschiffe eine auf Geräuschentwicklung und Geschwindigkeit optimierte Form. Ebenfalls ist die Geräuschemission beispielsweise auch von dessen Bauform und Größe abhängig, sodass eine Einschätzung der Fähigkeiten auch ohne genaue Identifikation in gewissen Rahmen möglich ist.

Erfindungsgemäß wird in Schritt a6) als statische Fremdinformationen die Detektionsreichweite aufgrund der in Schritt a4) ermittelten Art der weiteren Fluidfahrzeuge beschafft. Können keine konkreten Daten beschafft werden, so kann analog der Beschaffung der Information über die Art des weiteren Fluidfahrzeugs auch dessen Detektionsreichweite aus den bekannten Fluidfahrzeugen extrapoliert werden. Besonders bevorzugt wird für jedes weitere Fluidfahrzeuge die maximale Detektionsreichweite bei den aktuellen Betriebsparametern ermittelt. Beispielsweise und insbesondere wird aus der eigenen Geschwindigkeit und der damit verbundenen Geräuschemission und der bekannten Sonarempfindlichkeit das weiteren Fluidfahrzeugs die maximale Detektionsreichweite bestimmt.

In einer weiteren Ausführungsform der Erfindung wird die eigene Geschwindigkeit zur Anpassung der Detektionswahrscheinlichkeit und damit der Detektionsreichweite angepasst. Insbesondere wird die eigene Geschwindigkeit reduziert, um die eigene Signatur zu reduzieren und so die in Schritt b2) nicht zu durchquerenden Bereiche zu reduzieren.

In einer weiteren Ausführungsform der Erfindung wird aus der maximalen Detektionswahrscheinlichkeit und der Detektionsreichweite des weiteren Fluidfahrzeugs der minimale Abstand zum weiteren Fluidfahrzeug berechnet. Dieses stellt ein Beispiel für eine Korrelation der beschafften dynamischen Umgebungsinformationen mit sowohl den beschafften statischen Fremdinformationen sowie dem ausgewähltem Einsatzprofil dar.

In einer weiteren Ausführungsform der Erfindung werden in Schritt a5) dynamischer Eigeninformationen zur Bestimmung der Reichweite des Fluidfahrzeugs beschafft. Insbesondere werden in Schritt a5) Informationen zum Batteriestand und die Menge an vorhandenem Treibstoff beschafft. Hierbei kann es sich auch um die Menge von mehr als einem Treibstoff handeln, zum Beispiel um die Menge an Diesel für einen Dieselantrieb und die Menge an Wasserstoff für eine Brennstoffzelle.

In einer weiteren Ausführungsform der Erfindung wird in Schritt a5) die maximale Reichweite des Fluidfahrzeugs in Abhängigkeit von verwendeter Antriebsart und Geschwindigkeit errechnet. Beispielsweise wird die maximale Reichweite für Fahrt mit hoher Geschwindigkeit im getauchten Zustand auf der Basis des Ladezustands der Batterie, ggf. mit Unterstützung durch eine Brennstoffzelle, die maximale Reichweite für Fahrt mit niedriger Geschwindigkeit im getauchten Zustand unter Verwendung der Brennstoffzelle sowie die maximale Reichweite mit Dieselantrieb im aufgetauchtem Zustand errechnet.

In einer weiteren Ausführungsform der Erfindung wird in Schritt a3) die eigene Position mittels Tiefenmesser, Geschwindigkeitsmesssystem, Kreiselkompass und/oder Satellitennavigation bestimmt. Insbesondere wird in Schritt a3) die eigene Position in Relation zur letzten bekannten Position bestimmt. Ein Unterseeboot kann im getauchten Zustand die eigene Position oftmals nur relativ zur letzten aufgetauchen Position bestimmen, insbesondere mittels Tiefenmesser, Geschwindigkeitsmesssystem und Kreiselkompass. Die eigene Position kann beispielsweise auch relativ zu bekannten Landmarken erfolgen, wobei dieses jedoch zum einen nur geht, wenn diese im Einsatzgebiet vorhanden sind. Dieses kann beispielsweise im Ozean, wenn die maximale Tauchtiefe des Unterseebootes gering gegenüber der Tiefe des Gewässers ist, problematisch sein. Zum anderen setzt dieses die Bereitschaft zum Einsatz von zum Beispiel Aktivsonar voraus, was je nach Einsatzprofil nicht immer wünschenswert ist.

In einer weiteren Ausführungsform der Erfindung wird die voraussichtliche Position weiterer Fluidfahrzeuge vorausgesagt und aus dieser voraussichtlichen Position erfolgt die Berechnung der nicht zu durchquerenden Bereiche in Abhängigkeit von der Zeit. Bei der Voraussage können auch Standartmanöver verwendet werden.

In einer weiteren bevorzugten Ausführungsform der Erfindung wird eine Mehrzahl an voraussichtlichen Positionen für einen Zeitpunkt in der Zukunft vorausgesagt, wobei jeder voraussichtlichen Position eine Eintrittswahrscheinlichkeit zugeordnet wird. Hierdurch wird berücksichtigt, dass für weiter in der Zukunft liegende Zeitpunkte die Voraussagegenauigkeit abnimmt. Besonders bevorzugt wird bei der Berechnung der Detektionswahrscheinlich die Eintrittswahrscheinlichkeit berücksichtigt. Beispielsweise kann so ein Bereich als durchquerbar angesehen werden, wenn zwar in diesem Bereich die Wahrscheinlichkeit der Detektion sehr hoch wäre, wenn ein weiteres Fluidfahrzeug eine bestimmte Route nehmen wird, aber gleichzeitig diese bestimmte Route sehr unwahrscheinlich ist. Sollte sich zu einem späteren Zeitpunkt doch erweisen, dass das weitere Fluidfahrzeug diese unwahrscheinliche bestimmte Route wählt, so wird die eigene Route entsprechend des erfindungsgemäßen Verfahrens erneut angepasst.

In einer weiteren Ausführungsform der Erfindung werden in Schritt a4) Wetterdaten und Wetterprognosedaten als dynamische Umgebungsinformationen beschafft.

In einer weiteren Ausführungsform der Erfindung werden zur Bestimmen der optimalen Route in Schritt b3) Standartgefechtsmanöver berücksichtigt.

In einer weiteren Ausführungsform der Erfindung werden in Schritt c) aus der in Schritt b3) berechneten Route Steuerdaten ermittelt. Bevorzugt werden die in Schritt c) ermittelten Steuerdaten an eine Ruderanlage übermittelt.

Erfindungsgemäß wird ein Unterwasserfahrzeug als Fluidfahrzeug gewählt.

Das erfindungsgemäße Verfahren wird besonders bevorzugt in kontinuierlicher Weise betrieben und die Route an die jeweils neu erfassten Informationen entsprechend angepasst.

## Patentansprüche

1. Verfahren zur Berechnung einer Route für ein Fluidfahrzeug, wobei das Fluidfahrzeug ein Unterwasserfahrzeug ist, wobei das Verfahren die folgenden Schritte umfasst:
a) Ermitteln der Randparameter und
b) Ermitteln der optimalen Route, wobei
Schritt a) folgendes Schritte umfasst:
a1) Definieren eines Einsatzprofils,
a2) Definieren einer Zielposition,
a3) Erfassen der eigenen Position,
a4) Beschaffung Umgebungsinformationen,
a5) Beschaffung Eigeninformationen,
a6) Beschaffung statischer Fremdinformationen,
wobei die Schritte a1) bis a6) in beliebiger Reihenfolge durchgeführt werden,
wobei
in Schritt a4) dreidimensionale Umgebungsinformationen beschafft werden,
in Schritt a4) dynamische Umgebungsinformationen erfasst werden, wobei als dynamische Umgebungsinformationen mittels eines Sensors weitere Fluidfahrzeuge gesucht werden,
wobei Schritt b) die folgenden Schritte umfasst:
b1) Bestimmen nicht zu durchquerender Bereiche aus den in Schritt a4) beschafften dreidimensionalen Umgebungsinformationen,
b2) Bestimmen nicht zu durchquerender Bereiche aus den in Schritt a4) erfassten dynamischen Umgebungsinformationen in Korrelation mit sowohl den in Schritt a6) beschafften statischen Fremdinformationen sowie dem in Schritt a1) definierten Einsatzprofil,
b3) Bestimmen der Route unter Vermeidung der in den Schritten b1) und b2) bestimmten nicht zu durchquerenden Bereiche sowie von Routenparametern entsprechend dem in Schritt a1) definierten Einsatzprofil,
wobei in Schritt a4) Information über Position und Art weiterer Fluidfahrzeuge beschafft werden,
wobei in Schritt a1) das Einsatzprofil ausgewählt wird aus der Gruppe umfassend Transferfahrt, Schleichfahrt, Aufnahme, Auftauchen, Abtauchen, Angriff, Flucht,
**dadurch gekennzeichnet, dass**
in Schritt a6) als statische Fremdinformationen die Detektionsreichweite aufgrund der in Schritt a4) ermittelten Art der weiteren Fluidfahrzeuge beschafft wird.

2. Verfahren nach Anspruch 1, **dadurch gekennzeichnet, dass** in Schritt a4) weitere Fluidfahrzeuge mittels Sonarempfängers gesucht werden.

3. Verfahren nach einem der vorstehenden Ansprüche, **dadurch gekennzeichnet, dass** in Schritt a5) dynamische
Eigeninformationen zur Bestimmung der Reichweite des Fluidfahrzeugs beschafft werden.

4. Verfahren nach Anspruch 3, **dadurch gekennzeichnet, dass** in Schritt a5) Informationen zum Batteriestand und die Menge an vorhandenem Treibstoff beschafft werden.

5. Verfahren nach einem der Ansprüche 3 oder 4, **dadurch gekennzeichnet, dass** in Schritt a5) die maximale Reichweite des Fluidfahrzeugs in Abhängigkeit von verwendeter Antriebsart und Geschwindigkeit errechnet wird.

6. Verfahren nach einem der vorstehenden Ansprüche, **dadurch gekennzeichnet, dass** in Schritt a3) die eigene Position mittels Tiefenmesser, Geschwindigkeitsmesssystem, Kreiselkompass und/oder Satellitennavigation bestimmt wird.

7. Verfahren nach Anspruch 6, **dadurch gekennzeichnet, dass** die eigene Position in Schritt a3) in Relation zur letzten bekannten Position bestimmt wird.

8. Verfahren nach einem der vorstehenden Ansprüche, **dadurch gekennzeichnet, dass** die voraussichtliche Position weiterer Fluidfahrzeuge vorausgesagt wird und aus dieser voraussichtlichen Position Berechnung der nicht zu durchquerenden Bereiche in Abhängigkeit von der Zeit.

9. Verfahren nach Anspruch 8, **dadurch gekennzeichnet, dass** eine Mehrzahl an voraussichtlichen Positionen für einen Zeitpunkt in der Zukunft vorausgesagt wird, wobei jeder voraussichtlichen Position eine Eintrittswahrscheinlichkeit zugeordnet wird.

10. Verfahren nach einem der vorstehenden Ansprüche, **dadurch gekennzeichnet, dass** in Schritt a4) Wetterdaten und Wetterprognosedaten als dynamische Umgebungsinformationen beschafft werden.

11. Verfahren nach einem der vorstehenden Ansprüche, **dadurch gekennzeichnet, dass zur** Bestimmen der optimalen Route in Schritt b3) Standardgefechtsmanöver berücksichtigt werden.

12. Verfahren nach einem der vorstehenden Ansprüche, **dadurch gekennzeichnet, dass** in Schritt c) aus der in Schritt b3) berechneten Route Steuerdaten ermittelt werden.

13. Verfahren nach Anspruch 12, **dadurch gekennzeichnet, dass** die in Schritt c) ermittelten Steuerdaten an eine Ruderanlage übermittelt werden.

## Claims

1. Method for calculating a route for a fluid vehicle, wherein the fluid vehicle is an underwater vehicle, wherein the method comprises the following steps:
a) ascertaining the boundary parameters and
b) ascertaining the optimum route, wherein
step a) comprises the following steps:
a1) defining a use profile,
a2) defining a target position,
a3) obtaining the vehicle's own position,
a4) acquiring information on the surroundings,
a5) acquiring the vehicle's own information,
a6) acquiring static third-party information,
wherein the steps a1) to a6) are carried out in any desired sequence,
wherein
in step a4) three-dimensional information on the surroundings is acquired,
in step a4) dynamic information on the surroundings is acquired, wherein other fluid vehicles are searched for as dynamic information on the surroundings by means of a sensor,
wherein step b) comprises the following steps:
b1) determining areas which are not to be passed through from the three-dimensional information on the surroundings acquired in step a4),
b2) determining areas which are not to be passed through from the dynamic information on the surroundings obtained in step a4), in correlation with both static third-party information acquired in step a6) and the use profile defined in step a1),
b3) determining the route while avoiding the areas which are not to be passed through and which were determined in steps b1) and b2) as well as route parameters corresponding to the use profile defined in step a1),
wherein in step a4) information about the position and type of other fluid vehicles is acquired,
wherein in step a1) the use profile is selected from the group comprising transfer journey, silent running, taking on process, surfacing, diving, attacking, fleeing, long-term dive, avoidance action,
**characterized in that**
in step a6) the detection range is acquired as static third-party information on the basis of the type of other fluid vehicles ascertained in step a4) .

2. Method according to Claim 1, **characterized in that** in step a4) other fluid vehicles are searched for by means of a sonar receiver.

3. Method according to one of the preceding claims,
**characterized in that** in step a5) the vehicle's own dynamic information is acquired in order to determine the range of the fluid vehicle.

4. Method according to Claim 3, **characterized in that** in step a5) information on the battery status and the quantity of fuel which is present is acquired.

5. Method according to one of Claims 3 and 4,
**characterized in that** in step a5) the maximum range of the fluid vehicle is calculated as a function of the type of drive used and the speed.

6. Method according to one of the preceding claims,
**characterized in that** in step a3) the vehicle's own position is determined by means of a depth gauge, speed measuring system, gyroscopic compass and/or satellite navigation.

7. Method according to Claim 6, **characterized in that** in step a3) the vehicle's own position is determined in relation to the last known position.

8. Method according to one of the preceding claims,
**characterized in that** the anticipated position of other fluid vehicles is predicted and the areas which are not to be passed through are calculated from this anticipated position as a function of the time.

9. Method according to Claim 8, **characterized in that** a multiplicity of anticipated positions for a time in the future is predicted, wherein each anticipated position is assigned a probability of occurrence.

10. Method according to one of the preceding claims,
**characterized in that** in step a4) weather data and weather forecast data are acquired as dynamic information on the surroundings.

11. Method according to one of the preceding claims,
**characterized in that** standard combat maneuvers are taken into account for the determination of the optimum route in step b3).

12. Method according to one of the preceding claims,
**characterized in that** in step c) control data are ascertained from the route calculated in step b3).

13. Method according to Claim 12, **characterized in that** the control data ascertained in step c) are transferred to a rudder system.

## Revendications

1. Procédé de calcul d'un itinéraire pour un véhicule hydraulique, le véhicule hydraulique étant un véhicule sous-marin, le procédé comprenant les étapes suivantes :
a) identification des paramètres de bord et
b) identification de l'itinéraire optimal,
l'étape a) comprenant les étapes suivantes :
a1) définition d'un profil d'utilisation,
a2) définition d'une position cible,
a3) détection de la position propre,
a4) acquisition d'informations d'environnement,
a5) acquisition d'informations propres,
a6) acquisition d'informations externes statiques,
les étapes a1) à a6) étant exécutées dans un ordre quelconque,
des informations d'environnement tridimensionnelles étant acquises à l'étape a4),
des informations d'environnement dynamiques étant acquises à l'étape a4), des véhicules hydrauliques supplémentaires étant recherchés en tant qu'informations d'environnement dynamiques au moyen d'un capteur,
l'étape b) comprenant les étapes suivantes :
b1) détermination de zones ne devant pas être traversées à partir des informations d'environnement tridimensionnelles acquises à l'étape a4),
b2) détermination de zones ne devant pas être traversées à partir des informations d'environnement dynamiques acquises à l'étape a4) en corrélation à la fois avec les informations externes statiques acquises à l'étape a6) et le profil d'utilisation défini à l'étape a1),
b3) détermination de l'itinéraire en évitant les zones ne devant pas être traversées déterminées aux étapes b1) et b2) ainsi que de paramètres d'itinéraire conformément au profil d'utilisation défini à l'étape a1),
des informations à propos de la position et de la nature d'autres véhicules hydrauliques étant acquises à l'étape a4),
à l'étape a1), le profil d'utilisation étant choisi dans le groupe comprenant le transfert, la marche lente, le relevé, la remontée en surface, l'immersion, l'attaque, la fuite, la marche en plongée prolongée, l'évitement, **caractérisé en ce que**
les informations externes statiques acquises à l'étape a6) sont la portée de détection du fait de la nature des véhicules hydrauliques supplémentaires identifiés à l'étape a4).

2. Procédé selon la revendication 1, **caractérisé en ce que** des véhicules hydrauliques supplémentaires sont recherchés à l'étape a4) au moyen d'un récepteur de sonar.

3. Procédé selon l'une des revendications précédentes, **caractérisé en ce que** des informations propres dynamiques sont acquises à l'étape a5) afin de déterminer la portée du véhicule hydraulique.

4. Procédé selon la revendication 3, **caractérisé en ce que** des informations à propos de l'état de la batterie et de la quantité de carburant présent sont acquises à l'étape a5).

5. Procédé selon l'une des revendications 3 et 4, **caractérisé en ce qu'**à l'étape a5), la portée maximale du véhicule hydraulique est calculée en fonction du mode de propulsion utilisé et de la vitesse.

6. Procédé selon l'une des revendications précédentes, **caractérisé en ce qu'**à l'étape a3), la position propre est déterminée au moyen d'un manomètre d'immersion, d'un système de mesure de la vitesse, d'une boussole gyroscopique et/ou de la navigation par satellite.

7. Procédé selon la revendication 6, **caractérisé en ce que** la position propre est déterminée à l'étape a3) en relation avec la dernière position connue.

8. Procédé selon l'une des revendications précédentes, **caractérisé en ce que** la position probable de véhicules hydrauliques supplémentaires est prédite et, à partir de cette position probable, calcul des zones ne devant pas être traversées en fonction du temps.

9. Procédé selon la revendication 8, **caractérisé en ce qu'**une pluralité de positions probables sont prédites pour un instant donné dans le futur, une probabilité d'entrée étant associée à chaque position probable.

10. Procédé selon l'une des revendications précédentes, **caractérisé en ce que** des données météorologiques et des données de prévisions météorologiques sont acquises à l'étape a4) en tant qu'informations d'environnement dynamiques.

11. Procédé selon l'une des revendications précédentes, **caractérisé en ce que** des manœuvres de combat standard sont prises en compte pour déterminer l'itinéraire optimal à l'étape b3).

12. Procédé selon l'une des revendications précédentes, **caractérisé en ce que** des données de commande sont identifiées à l'étape c) à partir de l'itinéraire calculé à l'étape b3).

13. Procédé selon la revendication 12, **caractérisé en ce que** les données de commande identifiées à l'étape c) sont communiquées à un appareil de gouvernail.
